# EUROPEAN PATENT SPECIFICATION

(11) **EP 1 527 863 B1**
(45) Date of publication and mention of the grant of the patent: **20.03.2013**
(21) Application number: 03788046.5
(22) Date of filing: 06.08.2003
(51) Int. Cl.: B29B 17/02, F16L 59/06, F25D 23/06, B29B 17/00, B29B 13/10, B03B 9/06

(54) **METHOD FOR RECYCLING TREATMENT OF THERMAL INSULATING MATERIAL AND RECYCLED ARTICLE**
VERFAHREN ZUR WIEDERVERWENDUNG VON THERMISCHEN ISOLATIONSMATERIALIEN UND WIEDERVERWENDETES PRODUKT
PROCEDE DE RECYCLAGE DE MATERIAUX THERMO-ISOLANTS ET ARTICLE RECYCLE

(30) Priority: 06.08.2002 JP 2002228901
(43) Date of publication of application: 04.05.2005
(73) Proprietor: Panasonic Corporation, Kadoma-shi Osaka 571-8501 (JP)
(72) Inventor: YUASA, Akiko, Kyotanabe-shi, Kyoto 610-0352 (JP)
(74) Representative: Grünecker, Kinkeldey, Stockmair & Schwanhäusser
(86) International application number: PCT/JP2003/009990
(87) International publication number: WO 2004/016404

(56) References cited:
- EP-A- 0 442 113
- EP-A1- 1 149 862
- EP-A1- 1 400 770
- WO-A-96/35524
- JP-A- 2 144 183
- JP-A- 51 090 372
- JP-A- 2000 291 880
- JP-A- 2000 291 882
- JP-A- 2001 349 664
- JP-A- 2002 079 595
- JP-A- 2002 167 446
- JP-A- 2002 188 791
- US-A- 5 769 333
- US-A- 6 164 030
- US-B1- 6 217 804
- PATENT ABSTRACTS OF JAPAN vol. 014, no. 386 (C-0750), 21 August 1990 (1990-08-21) & JP 02 144183 A (NICHIAS CORP), 1 June 1990 (1990-06-01)
- PATENT ABSTRACTS OF JAPAN vol. 2002, no. 11, 6 November 2002 (2002-11-06) & JP 2002 188791 A (MATSUSHITA REFRIG CO LTD), 5 July 2002 (2002-07-05)
- PATENT ABSTRACTS OF JAPAN vol. 1999, no. 12, 29 October 1999 (1999-10-29) & JP 11 201375 A (HITACHI LTD), 30 July 1999 (1999-07-30)

## Description

### TECHNICAL FIELD

The present invention relates to a method for recycling thermal insulation material containing rigid urethane foam and vacuum insulation material which has inorganic material as the core material, and also relates to a recycled article.

### BACKGROUND ART

In recent years, in terms of environmental protection, the recycling of waste household electric appliances such as refrigerators and TV sets has been an extremely important issue, and various measures have been taken for this purpose.

In addition, from the importance of prevention of global warming, which is a global environment issue, energy conservation is considered essential and has also been pursued towards consumer-oriented products. Under such circumstances, a particularly remarkable improvement in performance is observed in foam insulation materials such as rigid urethane foam used in refrigerators, freezers, showcases and the like, while vacuum insulation materials and high-performing thermal insulated boxes utilizing these materials have been heavily developed. Furthermore, various measures have been taken for the recycling of these materials.

For example, Japanese Patent Laid-Open Application No. 2001-183054 suggests an approach to recycling foamed urethane used as the thermal insulation material in refrigerators; in this approach, regenerated polyol is used as a component of urethane raw solution. Japanese Patent Laid-Open Application No. H10-310663 suggests an approach to decomposing and recycling polyurethane resin; in this approach, polyurethane resin is chemically decomposed by using water in a supercritical or subcritical state, thus recovering raw material compounds and utilizable raw material derivatives of polyurethane resin.

However, so far, no consideration has been taken of the recycling of rigid urethane foam and vacuum insulation material used together, and they have probably been buried as mixed waste materials, without being recycled. With an expectation of increasing application of vacuum insulation material in the future to achieve higher insulation, it is extremely important to think about effective recycling.

When used in a thermal insulated box like a refrigerator, vacuum insulation material is generally used with rigid urethane foam. However, the vacuum insulation material comes into intimate contact with the highly adhesive urethane foam, thus making it extremely difficult to separate the vacuum insulation material only. This results in disposing both materials without separating them from each other. Such mixed waste materials containing different kinds of materials do not have a uniform quality, so that if they are used for recycled products, the recycled products do not have a uniform quality, and are not suitable for industrial products.

For industrial recycling, it is most important that mixed waste materials have a uniform quality.

JP02144183A discloses a recycled article by recycling thermal insulation waste material and mentions an urethane foam coat insulator and a calcium silicate heat insulator, which are pulverized. However, JP02144183A does not disclose that the article is a vacuum insulation material, which is made by sealing a powder consisting of mixed material into a packaging member under a reduced pressure.

JP2002188791A relates to a recycling method of a heat insulating box comprised of a polyester film covering material formed of a core material made of polyester fiber, i.e. is not concerned with inorganic material as a core material and a rigid urethane foam.

US6,164,030A discloses an apparatus comprising a rigid plate in the vacuum insulation panel, wherein said vacuum insulation panel comprises a rigid plastic foam recyclate such as a polyurethane foam, and furthermore contains porous silica. However, US6,164,030A does not relate to a vacuum insulation material, which is made by sealing a powder consisting of a mixed material into a packaging member under reduced pressure.

JP2000-291880 discloses a vacuum heat insulating material and a manufacturing method thereof wherein the vacuum heat insulating material consists of a core material using powder with grain sizes showing volume frequency peaks at 100-400 µm which may be a urethane powder. However, the method underlying said document does not involve an inorganic material content adjusting step in accordance with the present invention.

Furthermore, US6217804, US5769333, EP0442113, WO9635524, EP1149862, EP1400770, JP2144183, JP2002188791, JP11201375, JP2002079595, JP2000291882, JP2001349664, JP2002167446 and JP51090372 show methods of recycling insulation material.

### SUMMARY OF THE INVENTION

In view of the aforementioned problems, the present invention has an object of contributing to the recycling of thermal insulation material containing rigid urethane foam and vacuum insulation material. In order to achieve the object, the present invention provides a method for recycling thermal insulation material in such a manner that mixed waste materials can have a uniform quality and be reused at high quality, and also provides a recycled article. The present invention also provides an article that enables mixed waste materials to have a uniform quality and to be reused at high quality in order to contribute to the recycling of thermal insulation material containing rigid urethane foam and vacuum insulation material.

In order to achieve the aforementioned objects, the method for recycling thermal insulation material according to the present invention at least includes an inorganic material content adjusting process for adjusting the percentage of inorganic material content in mixed materials containing rigid urethane foam and inorganic material, thus making the quality of the mixed materials uniform. As a result, waste thermal insulation materials containing rigid urethane foam and vacuum insulation material which has inorganic material as the core material can be reused at high quality.

A recycled article according to the present invention is made from waste thermal insulation materials containing rigid urethane foam and vacuum insulation material which has inorganic material as the core material. The recycled article is characterized by undergoing at least an inorganic material content adjusting process for adjusting the percentage of inorganic material content in mixed materials containing rigid urethane foam and inorganic material, thus making the quality of the mixed materials uniform. As a result, the waste thermal insulation materials containing rigid urethane foam and vacuum insulation material which has inorganic material as the core material can be reused at high quality.

As a result, waste thermal insulation materials containing vacuum insulation material which has inorganic material as the core material can be reused as the recycled article of high quality.

### BRIEF DESCRIPTION OF PREFERRED EMBODIMENTS

Fig. 1 is a flowchart depicting a first embodiment of the recycling method according to the present invention.
Fig. 2 is a flowchart depicting a second embodiment of the recycling method according to the present invention.
Fig. 3 is a flowchart depicting a third embodiment of the recycling method according to the present invention.
Fig. 4 is a flowchart depicting a fourth embodiment of the recycling method according to the present invention.
Fig. 5 is a flowchart depicting a fifth embodiment of the recycling method according to the present invention.
Fig. 6 is a flowchart depicting a sixth embodiment of the recycling method according to the present invention.
Fig. 7 is a cross sectional view of a particle board in a seventh embodiment of a recycled article according to the present invention.
Fig. 8 is a view of vacuum insulation material in an eighth embodiment of the recycled article according to the present invention.
Fig. 9 is a cross sectional view of a particle board in a ninth embodiment of the recycled article according to the present invention.
Fig. 10 is a cross sectional view of vacuum insulation material in a tenth embodiment of the recycled article according to the present invention.
Fig. 11 is a schematic view of an eleventh embodiment of a refrigerator according to the present invention.

### DETAILED DESCRIPTION OF PREFERRED EMBODIMENTS

The present invention is characterized in that the recycling procedure for thermal insulation material containing rigid urethane foam and vacuum insulation material which has inorganic material as the core material at least includes an inorganic material content adjusting process for adjusting the percentage of inorganic material content in mixed waste materials containing rigid urethane foam and inorganic material. The present invention provides a method for recycling thermal insulation material in such a manner that mixed waste materials containing rigid urethane foam and inorganic material can have a uniform quality and be reused as high quality materials, and also provides a recycled article. The present invention can thus facilitate to make the mixed waste materials containing rigid urethane foam and inorganic material have a uniform quality and be reused as high quality materials.

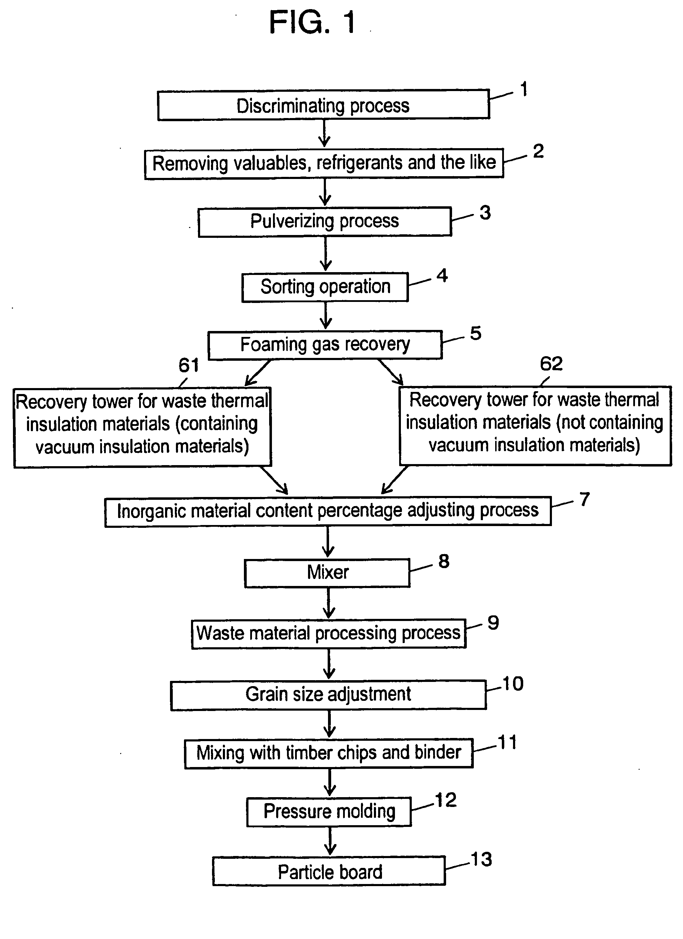

The embodiments of the present invention will be described in detail as follows with reference to Figs. 1 to 10. The present invention, however, is not limited to these embodiments.

### FIRST EXEMPLARY EMBODIMENT

Fig. 1 is a flowchart depicting a method for recycling refrigerators and a method for producing a particle board as a recycled article according to a first embodiment.

The procedural steps will be described with reference to Fig. 1. In Fig. 1, waste refrigerators which have been carried to a waste-treatment facility first undergo discriminating process 1 so as to be divided, in accordance with the indications on the outer boxes of the refrigerators, into refrigerators containing vacuum insulation material which has inorganic material as the core material and rigid urethane foam (hereinafter referred to as the multi thermal insulation material type refrigerators), and refrigerators containing rigid urethane foam, but not vacuum insulation material (hereinafter referred to as the single thermal insulation material type refrigerators).

Next, the multi thermal insulation material type refrigerators and the single thermal insulation material type refrigerators undergo removing process 2 for removing valuables such as compressors and refrigerants in the freezers, and then proceed to pulverizing process 3 where sorting operation 4 is performed. In sorting operation 4, pulverized waste materials are sorted into predetermined kinds of materials by using magnetic force, wind force or other means so as to be recovered. The waste thermal insulation materials sorted in this process undergo foaming gas recovering process 5 where foaming gas contained in the rigid urethane foam is recovered.

The multi thermal insulation material type refrigerators and the single thermal insulation material type refrigerators can take turns in using the facilities for pulverizing process 3, sorting operation process 4 and foaming gas recovering process 5. When the single thermal insulation material type refrigerators are treated after the multi thermal insulation material type refrigerators are treated, it is preferable to clean inside the facilities for these processes in order to remove inorganic material remaining in the facilities.

After the recovery of the foaming gas, the waste thermal insulation materials which have been discharged from the multi thermal insulation material type refrigerators and single thermal insulation material type refrigerators are stored respectively in different recovery towers 61 and 62 for waste thermal insulation materials. In recovery tower 61 with the waste thermal insulation materials recovered from the multi thermal insulation material type refrigerators, the percentage of inorganic material content in the waste materials is measured to use the information when the waste thermal insulation materials are mixed with the waste thermal insulation materials recovered from the single thermal insulation material type refrigerators in the subsequent inorganic material content adjusting process 7.

In inorganic material content adjusting process 7, based on the measurement results of the percentage of inorganic material content, appropriate amounts are fed from the respective recovery towers 61 and 62 into mixer 8 so as to prepare mixed waste materials whose inorganic material content has been adjusted. The inorganic material content here is not less than 0.01% nor more than 60%, and is adjusted in accordance with the required physical properties of the recycled article. In the first embodiment, the appropriate percentage of inorganic material content is not less than 0.01% nor more than 10%, and more preferably, not less than 0.01% nor more than 2%. When the particle board needs to have high bending strength, it is preferable that the percentage of inorganic material content is low.

In the subsequent waste material processing process 9, the mixed waste materials whose inorganic material content has been adjusted are subjected to an appropriate grain size adjustment in grain size adjusting process 10. After being subjected to mixing process 11 for being mixed with timber chips and binder, and pressure molding process 12, the mixed waste materials are formed into particle board 13. Here, the mixture with the timber chips and binder is optional, and the amounts to be added are not restricted.

The particle board is thus formed by pressurizing the mixed waste materials whose inorganic material content has been adjusted and which contain rigid urethane foam and inorganic material, so that it can have strength as a board member. In this manner, thermal insulation materials containing rigid urethane foam and vacuum insulation material which has inorganic material as the core material can be reused as high quality materials.

### SECOND EXEMPLARY EMBODIMENT

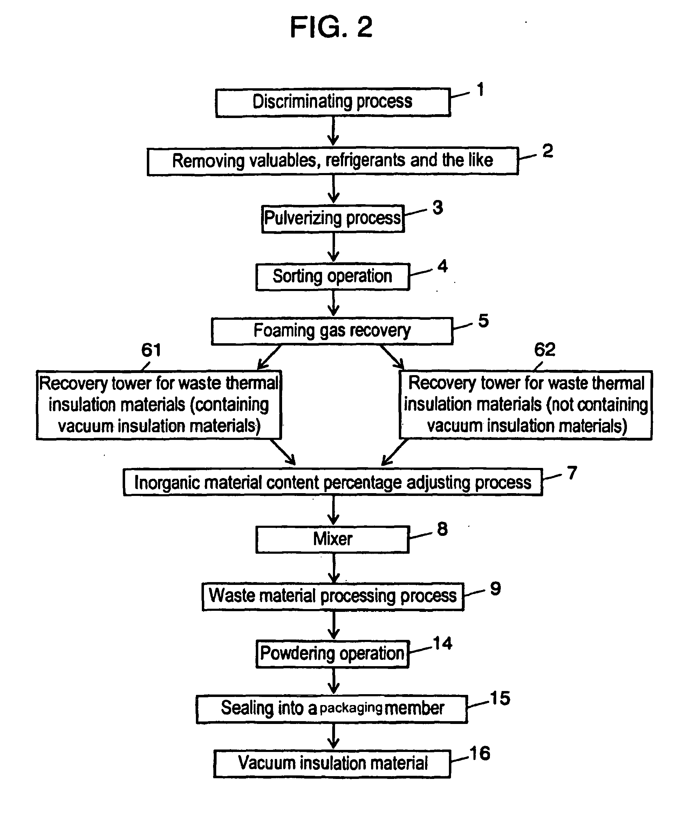

Fig. 2 is a flowchart depicting a method for recycling refrigerators and a method for producing vacuum insulation material as a recycled article according to a second embodiment.

The procedural steps will be described with reference to Fig. 2. In Fig. 2, waste refrigerators which have been carried to a waste-treatment facility first undergo discriminating process 1 so as to be divided, in accordance with the indications on the outer boxes of the refrigerators, into multi thermal insulation material type refrigerators with a glass fiber assembly as the core material, and single thermal insulation material type refrigerators.

Next, valuables such as compressors and refrigerants in the freezers are removed from the multi thermal insulation material type and single thermal insulation material type refrigerators, and then the remaining waste materials are sorted into predetermined kinds of materials so as to be recovered. Then, foaming gas contained in the rigid urethane foam in the sorted thermal insulation materials is recovered in foaming gas recovering process 5.

After the recovery of the foaming gas, the waste thermal insulation materials which have been discharged from the multi thermal insulation material type and single thermal insulation material type refrigerators are stored respectively in different recovery towers 61 and 62 for waste thermal insulation materials. In recovery tower 61 with the waste thermal insulation materials recovered from the multi thermal insulation material type refrigerators, the percentage of inorganic material content in the waste materials is measured to use the information when the waste thermal insulation materials are mixed with the waste thermal insulation materials recovered from the single thermal insulation material type refrigerators in the subsequent inorganic material content adjusting process.

In inorganic material content adjusting process 7, based on the measurement results of the percentage of inorganic material content, appropriate amounts are fed from the respective recovery towers 61 and 62 into mixer 8 so as to prepare mixed waste materials whose inorganic material content has been adjusted. The inorganic material content here is not less than 0.01% nor more than 60%, and is adjusted in accordance with the required physical properties of the recycled article. In the second embodiment, the appropriate percentage of inorganic material content is not less than 0.1% nor more than 60%, and more preferably, not less than 0.5% nor more than 40%. When reused as the core material of vacuum insulation material, the inorganic material functions as an modifier for the filling performance of waste rigid urethane foam, so that the optimum amount to be added is determined by the size of the surface area of the rigid urethane foam powder.

In the subsequent waste material processing process 9, the mixed waste materials whose inorganic material content has been adjusted are subjected to an appropriate powdering operation in the next process 14. Then in sealing process 15, the waste powder is sealed into a packaging member under a reduced pressure so as to obtain vacuum insulation material 16.

In the second embodiment, the mixed waste materials containing rigid urethane foam and glass fiber assemblies have an appropriate percentage of glass fiber assembly content and are finely powered, thus improving the filling performance of the rigid urethane foam in the form of a fine powder. As a result, in the vacuum insulation material thus produced, the pores formed by the rigid urethane foam powder have a minimized size even if the porosity is the same as the conventional one, so as to have high insulation properties. This makes it possible to reuse thermal insulation material containing rigid urethane foam and vacuum insulation material which has inorganic material as the core material as high quality material.

### THIRD EXEMPLARY EMBODIMENT

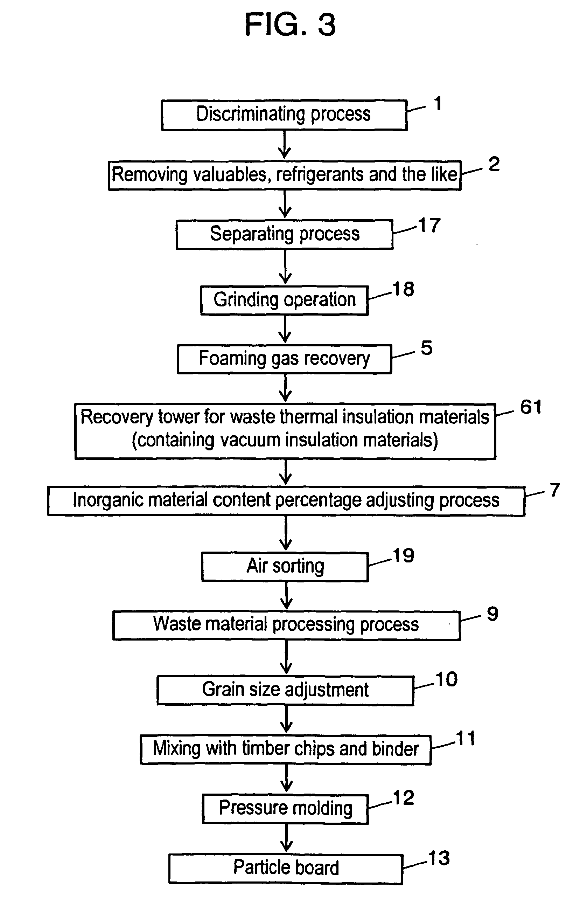

Fig. 3 is a flowchart depicting a method for recycling refrigerators containing rigid urethane foam and vacuum insulation material which has inorganic material as the core material (the multi thermal insulation material type refrigerators), and a method for producing a particle board as a recycled article according to a third embodiment.

The procedural steps will be described with reference to Fig. 3.

Waste refrigerators which have been carried to a waste-treatment facility first undergo discriminating process 1 so as to be divided, in accordance with the indications on the outer boxes of the refrigerators, into the multi thermal insulation material type refrigerators and single thermal insulation material type refrigerators. The term "single thermal insulation material type refrigerators" indicate refrigerators which have only rigid urethane foam as the thermal insulation material.

Next, the multi thermal insulation material type refrigerators undergo removing process 2 for removing valuables such as compressors and refrigerants in the freezers, and then proceed to separating process 17 where the rigid urethane foam and the vacuum insulation material are cut out as integral units. Separating process 17 prevents the integral units from being pulverized together with other units, thus making the sorting operation either unnecessary or very simple.

After the integral units of the waste thermal insulation materials undergo grinding operation 18, foaming gas contained in the thermal insulation materials is recovered in recovering process 5. The grinding operation is not the only approach available for the recovery of the foaming gas.

After the recovery of the foaming gas, the mixed waste materials containing rigid urethane foam and inorganic material which have been discharged from the multi thermal insulation material type refrigerators are stored in recovery tower 61 for waste thermal insulation materials. The percentage of inorganic material content in the waste materials which is measured in this process is used in the subsequent inorganic material content adjusting process.

In inorganic material content adjusting process 7, inorganic material is sorted out by air sorter 19 by making use of the difference in specific gravity between the rigid urethane foam and the inorganic material. The operating conditions of air sorter 19 are determined based on the measurement results of the percentage of inorganic material content in the previous process 7. As the result of this operation, mixed waste materials whose inorganic material content has been adjusted are obtained. The inorganic material content here is not less than 0.01% nor more than 60%, and is adjusted in accordance with the required physical properties of the recycled article. In the third embodiment, the appropriate percentage of inorganic material content is not less than 0.01% nor more than 10%, and more preferably, not less than 0.01% nor more than 2%. When the particle board needs to have high bending strength, it is preferable that the percentage of inorganic material content is low.

In the subsequent waste material processing process 9, the mixed waste materials whose inorganic material content has been adjusted are subjected to an appropriate grain size adjustment (grain size adjusting process 10) depending on their uses. After being subjected to mixing process 11 for being mixed with timber chips and binder, and pressure molding process 12, the mixed waste materials are formed into particle board 13.

Since being produced by pressurizing the mixed waste materials whose inorganic material content has been adjusted and which contain rigid urethane foam and inorganic material, the particle board can have strength as a board member. In this manner, thermal insulation materials containing rigid urethane foam and vacuum insulation material which has inorganic material as the core material can be reused at high quality.

Since the adjustment of the percentage of inorganic material content is done by removing some amount of the inorganic material, it is of course possible to reduce the percentage of inorganic material content, or even to increase the percentage of inorganic material content by adding a desired amount of the removed inorganic material. It is also possible, by selecting the removal method and removal conditions, to classify into two groups of waste materials: one group of waste materials with decreased inorganic material content and the other group of waste materials with increased inorganic material content. Furthermore, the provision of separating process 17 prevents the integral units from being pulverized together with other units, thus forming particle board 13 with very few impurities.

### FOURTH EXEMPLARY EMBODIMENT

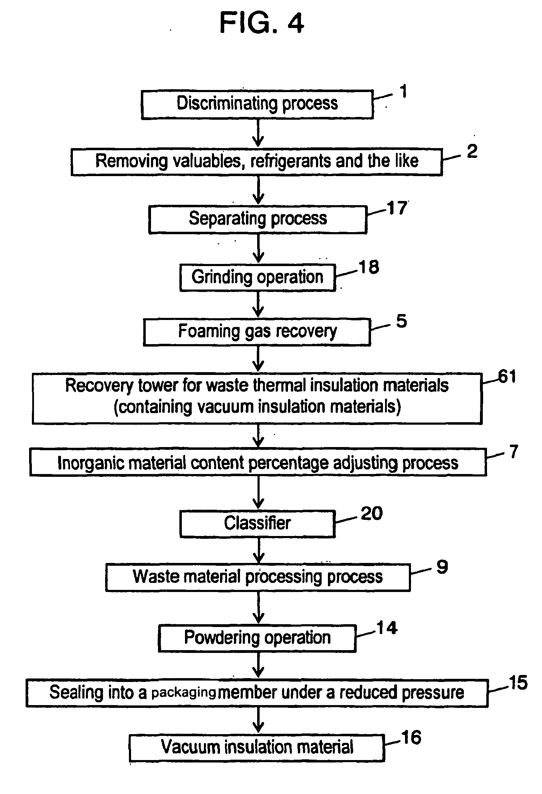

Fig. 4 is a flowchart depicting a method for recycling refrigerators containing rigid urethane foam and vacuum insulation material which has inorganic material as the core material (the multi thermal insulation material type refrigerators), and a method for producing vacuum insulation material as a recycled article according to a fourth embodiment.

The procedural steps will be described with reference to Fig. 4.

Waste refrigerators which have been carried to a waste-treatment facility first undergo discriminating process 1 so as to be divided, based on the information stored in an electronic medium, into multi thermal insulation material type refrigerators and single thermal insulation material type refrigerators. In this process, the weight of inorganic material and the weight of rigid urethane foam are also read. These pieces of information are used in inorganic material content adjusting process 7, or could be used for recycling process management.

Next, the multi thermal insulation material type refrigerators having a glass fiber assembly as the core material undergo removing process 2 for removing valuables such as compressors and refrigerants in the freezers, and then proceed to separating process 17 where the rigid urethane foam and the vacuum insulation material are cut out as integral units. The separating process prevents the integral units from being pulverized together with other units, thus making the sorting operation either unnecessary or very simple.

After the integral units of the waste thermal insulation materials undergo grinding operation 18, foaming gas contained in the rigid urethane foam is recovered in recovering process 5. In grinding operation 18, the rigid urethane foam and the glass fiber assemblies are both finely crushed, but the glass fiber assemblies are crushed more finely because of their brittleness.

After the recovery of the foaming gas, the mixed waste materials containing the rigid urethane foam and the glass fiber assemblies are stored in recovery tower 61 for waste thermal insulation materials. Since the information on the inorganic material weight and rigid urethane foam weight is obtained in discriminating process 1, in recovery tower 61 there is no need for the measurement of the percentage of inorganic material content in the waste materials recovered from the multi thermal insulation material type refrigerators.

In inorganic material content adjusting process 7, the glass fiber assemblies are sorted out by classifier 20 by making use of the difference in grain size between the rigid urethane foam and the glass fiber assemblies. The operating conditions of classifier 20 are determined based on the information obtained in the discriminating process. By this operation, mixed waste materials which contain rigid urethane foam and whose inorganic material content has been adjusted are obtained. The inorganic material content here is not less than 0.01% nor more than 60%, and is adjusted in accordance with the required physical properties of the recycled article. In the fourth embodiment, the appropriate percentage of inorganic material content is not less than 0.1% nor more than 60%, and more preferably, not less than 0.5% nor more than 40%. When reused as the core material of vacuum insulation material, the inorganic material functions as a modifier for the filling performance of waste rigid urethane foam. So the optimum amount of inorganic material to be added is determined by the size of the surface area of the rigid urethane foam powder.

In the subsequent waste material processing process 9, the mixed waste materials whose inorganic material content has been adjusted are subjected to appropriate powdering operation 14, and after undergoing sealing process 15 for sealing the waste powder into a packaging member under a reduced pressure, vacuum insulation material 16 is obtained.

The inorganic material in the mixed waste materials containing rigid urethane foam and inorganic material has the effect of improving the filling performance of the rigid urethane foam powder by being adjusted the percentage of its content and being finely powdered.

The vacuum insulation material produced in accordance with the method of the fourth embodiment can have high insulation properties by minimizing the size of pores formed by the rigid urethane foam powder. In this manner, thermal insulation materials containing rigid urethane foam and vacuum insulation material which has inorganic material as the core material can be reused at high quality.

Furthermore, the provision of separating process 17 prevents the integral units from being pulverized together with other units, thus forming vacuum insulation material 16 with very few impurities.

### FIFTH EXEMPLARY EMBODIMENT

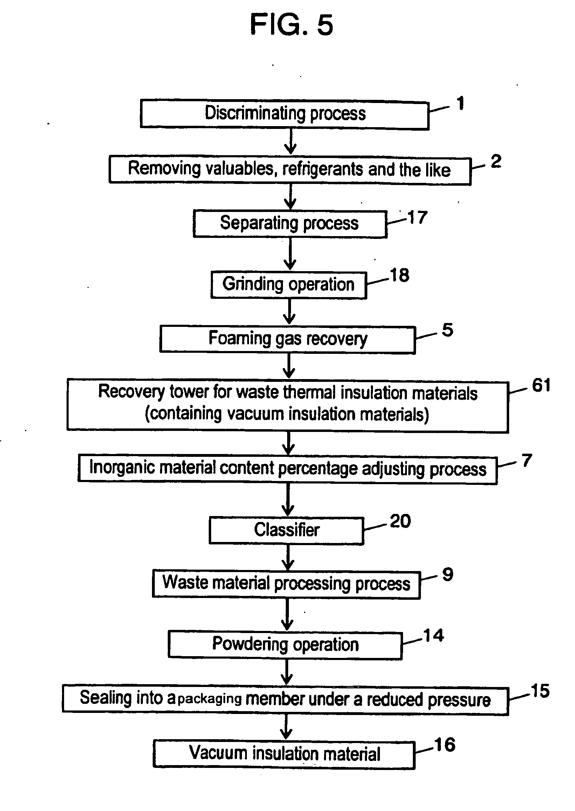

Fig. 5 is a flowchart depicting a method for recycling refrigerators containing rigid urethane foam and vacuum insulation material which has dry silica powder as the core material (the multi thermal insulation material type refrigerators), and a method for producing vacuum insulation material as a recycled article according to a fifth embodiment.

The procedural steps will be described with reference to Fig. 5.

Waste refrigerators which have been carried to a waste-treatment facility first undergo discriminating process 1 so as to be divided, based on the information stored in an electronic medium, into the multi thermal insulation material type refrigerators and single thermal insulation material type refrigerators. In this process, the weight of inorganic material and the weight of rigid urethane foam are also read. These pieces of information are used in inorganic material content adjusting process 7, or could be used for recycling process management.

Next, the multi thermal insulation material type refrigerators having dry silica powder as the core material undergo removing process 2 for removing valuables such as compressors and refrigerants in the freezers, and then proceed to separating process 17 where the rigid urethane foam and the vacuum insulation material are cut out as integral units. The separating process prevents the integral units from being pulverized together with other units, thus making the sorting operation either unnecessary or very simple.

As the result that the integral units of the waste thermal insulation materials undergo grinding operation 18, foaming gas contained in the rigid urethane foam is recovered in recovering process 5. In this grinding operation, the rigid urethane foam is ground to fine powder, while the dry silica powder is originally smaller in size.

After the recovery of the foaming gas, the mixed waste materials containing rigid urethane foam and dry silica powder are stored in recovery tower 61 for waste thermal insulation materials. Since the information on the inorganic material weight and rigid urethane foam weight is obtained in discriminating process 1, there is no need here for the measurement of the percentage of inorganic material content in the waste thermal insulation materials recovered from the multi thermal insulation material type refrigerators.

In inorganic material content adjusting process 7, the dry silica powder is sorted out by classifier 20 by making use of the difference in grain size between the rigid urethane foam and the dry silica powder. The operating conditions of classifier 20 are determined based on the information obtained in the discriminating process. By this operation, mixed waste materials containing rigid urethane foam whose inorganic material content has been adjusted are obtained. The inorganic material content here is not less than 0.01% nor more than 99.99%, and is adjusted in accordance with the required physical properties of the recycled article. In the fifth embodiment, the appropriate percentage of inorganic material content is not less than 0.1% nor more than 60%, and more preferably, not less than 0.5% nor more than 40%. When reused as the core material of vacuum insulation material, the inorganic material functions as an modifier for the filling performance of waste rigid urethane foam, so that the optimum amount of inorganic material to be added is determined by the size of the surface area of the rigid urethane foam powder. Here, modifying the filling performance means that the powder can be filled easily or densely.

In the subsequent waste material processing process 9, the mixed waste materials whose inorganic material content has been adjusted are subjected to appropriate powdering operation 14, and after undergoing sealing process 15 for sealing the waste powder into a packaging member under a reduced pressure, vacuum insulation material 16 is obtained.

The filling performance of the rigid urethane foam powder can be modified or improved by adjusting the percentage of dry silica content in the mixed waste materials containing the rigid urethane foam and the dry silica. As a result, the vacuum insulation material produced in accordance with the method of the fifth embodiment can have high insulation properties because the size of pores formed by the rigid urethane foam powder is minimized. In this manner, thermal insulation materials containing rigid urethane foam and vacuum insulation material which has inorganic material as the core material can be reused at high quality.

### SIXTH EXEMPLARY EMBODIMENT

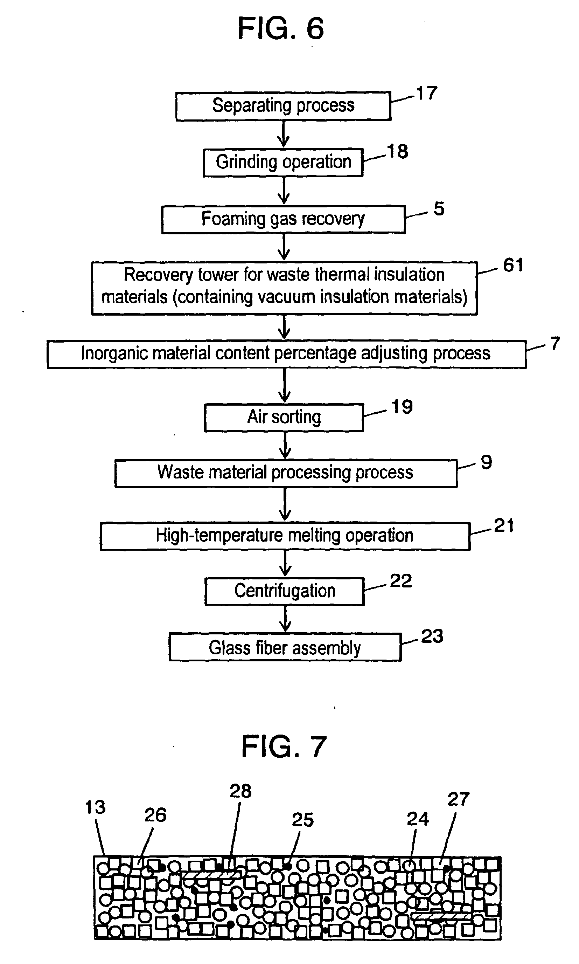

Fig. 6 is a flowchart depicting a method for recycling thermal insulation material containing rigid urethane foam and vacuum insulation material which has a glass fiber assembly as the core material (hereinafter, the multi thermal insulation materials), and a method for producing a glass fiber assembly as a recycled article according to a sixth embodiment.

The procedural steps will be described with reference to Fig. 6.

Waste thermal insulation materials which have been carried to a waste-treatment facility first undergo separating process 17 where the rigid urethane foam and the vacuum insulation material are cut out as integral units. Separating process 17 prevents the integral units from being pulverized together with other units, thus making the sorting operation either unnecessary or very simple.

After the integral units of the waste thermal insulation materials undergo grinding operation 18, foaming gas contained in the thermal insulation materials is recovered in recovering process 5.

After the recovery of the foaming gas, the mixed waste materials containing rigid urethane foam and inorganic material which have been discharged from the multi thermal insulation materials are stored in recovery tower 61 for waste thermal insulation materials. In this process, the waste thermal insulation materials recovered from the multi thermal insulation materials are measured for the glass content, and this information is used in the subsequent inorganic material content adjusting process 7.

In inorganic material content adjusting process 7, the glass fiber is sorted out by air sorter 19 by making use of the difference in specific gravity between the rigid urethane foam and the inorganic material. The operating conditions of air sorter 19 are determined based on the measurement results of the percentage of inorganic material content. The inorganic material content here is not less than 0.01% nor more than 60%, and is adjusted in accordance with the required physical properties of the recycled article.

In the subsequent waste material processing process 9, the mixed waste materials mainly composed of glass fiber are subjected to appropriate high-temperature melting operation 21, and then to centrifugation 22 so as to return to glass fiber assembly 23.

### SEVENTH EXEMPLARY EMBODIMENT

A cross sectional view of particle board 13 as a recycled article produced by the processes in the first embodiment is shown in Fig. 7 as an example of a seventh embodiment. In Fig. 7, particle board 13 mainly contains rigid urethane foam waste 24, inorganic material waste 25 which used to be the core material of vacuum insulation material, timber chips 26 and binder 27. Since being made of the waste materials which have been pulverized in pulverizing process 3 and then sorted out by magnetic or wind force, particle board 13 contains some impurities 28. The term "particle board" indicates a board made of organic or inorganic material in particulate or powdered form by using pressure, heat or binder. The particle board has only to contain the waste thermal insulation materials at least in part.

### EIGHTH EXEMPLARY EMBODIMENT

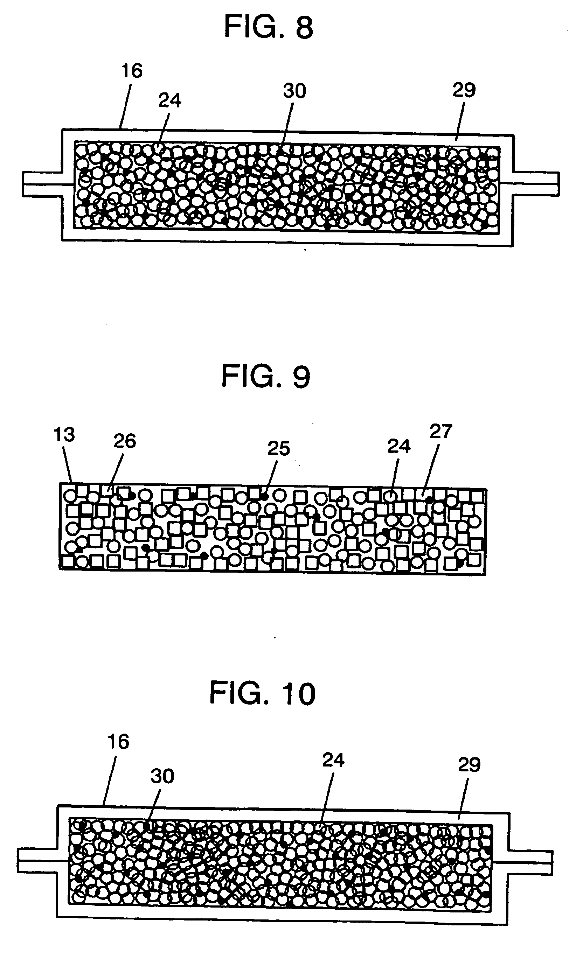

A cross sectional view of vacuum insulation material 16 as a recycled article produced by the processes of the second embodiment is shown in Fig. 8 as an example of an eighth embodiment. Vacuum insulation material 16 is formed of packaging member 29 containing a metal foil layer and a thermoplastic polymer layer, and of a core material which is filled into packaging member 29 as the core material and which contains finely powdered rigid urethane foam waste 24 and glass fiber assembly waste 30 that used to be the core material of vacuum insulation material. The core material is dried for 1 hour at 140°C, and inserted into packaging member 29. After the pressure inside is reduced down to 13.3 Pa, the opening is bonded by a heat seal so as to produce vacuum insulation material 16. The vacuum insulation material thus obtained is checked for thermal conductivity by using Auto-λ manufactured by EKO Instruments Co., Ltd. at an average temperature of 24°C to find that the thermal conductivity is 0.0060 Kcal/m·h·°C with excellent insulation performance.

In the vacuum insulation material thus formed, the finely powdered glass fiber assembly waste adheres to the surface of the finely powdered urethane foam waste so as to improve the filling performance of the finely powdered urethane foam waste, thus minimizing the pore size. As a result, the vacuum insulation material shows excellent insulation performance.

### NINTH EXEMPLARY EMBODIMENT

A cross sectional view of particle board 13 as a recycled article produced by the processes in the third embodiment is shown in Fig. 9 as an example of a ninth embodiment. Particle board 13 mainly contains rigid urethane foam waste 24, inorganic material waste 25 which used to be the core material of vacuum insulation material, timber chips 26 and binder 27.

Since being made of the waste materials which have been cut out as integral units of the rigid urethane foam and the vacuum insulation material in separating process 17 without being pulverized together with other units, particle board 13 contains very few impurities.

### TENTH EXEMPLARY EMBODIMENT

A cross sectional view of vacuum insulation material 16 as a recycled article produced by the processes of the fourth embodiment is shown in Fig. 10 as an example of a tenth embodiment. Vacuum insulation material 16 is formed of packaging member 29 containing a metal foil layer and a thermoplastic polymer layer, and of a core material which is filled into packaging member 29 as the core material and which contains rigid urethane foam waste 24 and glass fiber assembly waste 30 that used to be the core material of vacuum insulation material. The core material is dried for 1 hour at 140°C, and inserted into packaging member 29. After the pressure inside is reduced down to 13.3 Pa, the opening is bonded by a heat seal so as to produce vacuum insulation material 16. The vacuum insulation material thus obtained is checked for thermal conductivity by using Auto-λ manufactured by EKO Instruments Co., Ltd. at an average temperature of 24°C to find that the thermal conductivity is 0.0055 Kcal/m·h·°C with further excellent insulation performance. In the vacuum insulation material thus formed, the finely powdered inorganic material waste adheres to the surface of the finely powdered urethane foam waste so as to improve the filling performance of the finely powdered urethane foam waste, thus minimizing the pore size. As a result, the vacuum insulation material shows excellent insulation performance.

Since being made of the waste materials which have been cut out as integral units of the rigid urethane foam and the vacuum insulation material in separating process 17 without being pulverized together with other units, particle board 13 contains very few impurities, thus showing more excellent insulation performance than in the eighth embodiment.

### ELEVENTH EXEMPLARY EMBODIMENT

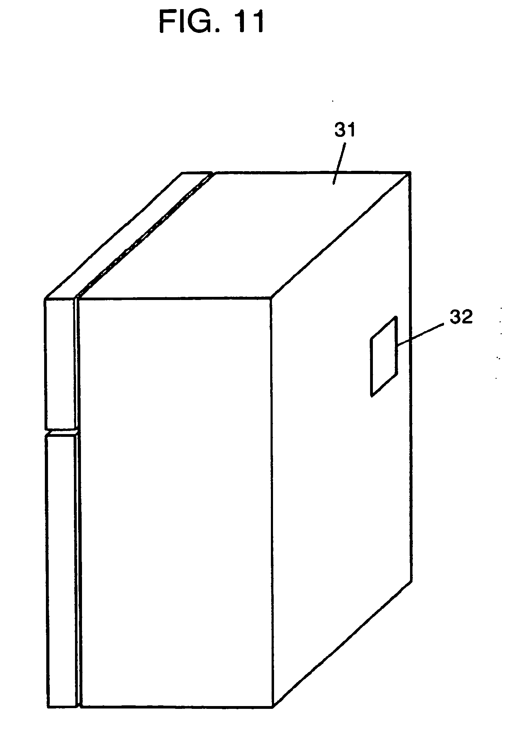

Refrigerator 31 as an example of an eleventh embodiment is shown in Fig. 11. Refrigerator 31 is a multi thermal insulation material type refrigerator provided with rigid urethane foam and vacuum insulation material which has inorganic material as the core material. The outer box of the refrigerator has control display panel 32 fixed thereon to indicate the use of vacuum insulation material in the refrigerator.

As control display panel 32, it is possible to use a SmartMedia card with information stored thereon, a plate with a bar code stored thereon or the like so that the information stored can be read electronically in the discriminating process, thus efficiently changing the method for processing the refrigerator.

The vacuum insulation material used in the present invention is formed of a core material and a packaging member, and the core material is sealed into the packaging member under a reduced pressure. To maintain vacuum in the vacuum insulation material for a long period of time, the packaging member can contain a water absorbent and a gas absorbent such as a physical absorbent like synthetic zeolite, active carbon, active alumina, silica gel, dawsonite or hydrotalcite, or a chemical absorbent like an oxide or hydroxide of an alkali metal or an alkali earth metal. It is also possible to provide a process of drying the core material before the vacuum sealing.

The packaging member used in the present invention can be made of material capable of blocking the core material from the outside air. Examples of such material include: thin metal plates of stainless steel, aluminum and iron; and laminate members of these thin metal plates and plastic films. The laminate member preferably has a surface protection layer, a gas barrier layer and a heat adhesive layer. The surface protection layer can be made of polyethylene terephthalate stretch film or polypropylene stretch film. In addition, providing nylon film outside can improve flexibility, thus improving bendability.

The gas barrier layer can be made of metal foil or metallized film by using aluminum or the like. To reduce heat leak and to have more excellent insulating effects, the metallized film is more preferable. It is preferable to metallize on the surface of film such as polyethylene terephthalate film, ethylene-vinyl alcohol copolymer film, or polyethylene naphthalate film.

The heat adhesive layer can be made of low density polyethylene film, high density polyethylene film, polypropylene film, polyacrylonitrile film, unstretched polyethylene terephthalate film or the like.

The inorganic material used in the present invention can be applied in various forms such as fiber, powder, porous body and foam. The fiber can be an inorganic material fiber such as glass wool, ceramic fiber or rock wool, and can be in any form such as non-woven fabric, textile or cotton. It is also possible to use organic binder to make the inorganic fiber an assembly. The powder can be an inorganic material powder such as agglomerated silica power, crushed powder of foamed perlite, diatomaceous earth powder, calcium silicate powder, calcium carbonate powder, calcium carbonate powder, clay or talc. The porous body can be an inorganic oxide aerogel such as a silica aerogel or an alumina aerogel. It is also possible to use a mixture of two or more kinds of them.

The term "the percentage of inorganic material content" used in the present invention indicates the weight percentage of inorganic material in the waste thermal insulation materials, and is calculated by putting the weight of the inorganic material in the mixed waste materials containing rigid urethane foam and inorganic material in the numerator, and by putting the sum of the rigid urethane foam weight and the inorganic material weight in the denominator. That is, the weight of the inorganic material divided by the sum of the rigid urethane foam weight and inorganic material weight makes the percentage of inorganic material content. The inorganic material content is adjusted to be not less than 0.01% nor more than 60% in accordance with the desired properties of the recycled article to be made from the waste thermal insulation materials. Although the appropriate percentage of inorganic material content differs depending on the desired physical properties of the recycled article, when the inorganic material is regenerated as the core material of vacuum insulation material, it is preferably not less than 0.1% nor more than 20%.

It is industrially difficult to make the inorganic material content less than 0.01 or more than 60%.

In the embodiments, one approach to the adjustment of the percentage of inorganic material mixture is to mix the rigid urethane foam and inorganic materials recovered from multi thermal insulation materials with the rigid urethane foam recovered from single thermal insulation materials in such a manner as to have a uniform percentage of inorganic material content. The other approach is to remove some amounts of inorganic material from the mixed waste materials containing rigid urethane foam and inorganic material recovered from the multi thermal insulation materials in such a manner as to have a uniform percentage of inorganic material content. However, these are not the only approaches applicable for the present invention. Note that the thermal insulation material containing rigid urethane foam and vacuum insulation material having a glass fiber assembly as the core material is referred to as the multi thermal insulation material, whereas the thermal insulation material not containing vacuum insulation material is referred to as the single thermal insulation material.

For the separation of the inorganic material, it is possible to use classifying technique such as dry classification, wet classification or sieving. Gravity separation is also applicable. It is preferable to select an appropriate approach of separation in accordance with the features of the inorganic material to be used and with the properties of the mixed waste materials shown after the pulverizing process or the separating process.

For the pulverization in the pulverizing process in the present invention, general-purpose crushers such as preshredders and one-axis car shredders can be used. It is also possible to combine two or more kinds of crushers so that fine crushing can be performed after rough crushing.

The term "particle board" used in the present invention indicates a board made of organic or inorganic material in particulate or powdered form by using pressure, heat or binder. The particle board has only to contain the waste thermal insulation materials at least in part. The binder can be an organic or inorganic material binder capable of binding particles containing waste multi materials. As the organic material binder, it is possible to use thermoplastic or thermosetting resin which is generally used. Examples of the thermoplastic resin include: polypropylene, polyethylene, polystyrene, a styrene-butadiene-acrylonitrile copolymer, polyamide, polycarbonate, polyacetal and polyethylene terephthalate. Examples of the thermosetting resin include: phenol, urea, melanine and urethane. These can be used solely or in a mixture of two or more kinds. As the inorganic binder, it is possible to use an inorganic material that functions as a binding material such as water glass, colloidal silica, silica sol or alumina sol.

The refrigerator according to the present invention is applicable not only as a refrigerator used between -30°C and normal temperature which is the normal operating temperature range, but also as a refrigerator making use of heating and cooling in a wider temperature range, such as a vending machine. The refrigerator also can be a gas refrigerator as well as an electric refrigerator.

As the discriminating means used in the present invention, it is possible (1) to provide a control display panel indicating that the refrigerator has vacuum insulation material or (2) to provide a bar cord indicating that the refrigerator contains vacuum insulation material, the weights of the core material and rigid urethane foam so as to perform automatic discrimination; however, the present invention is not limited to these means. As shown in Fig. 11, the discriminating means is preferably displayed or recorded on the outer box of the refrigerator, and more preferably, on the rear surface. The reason for this is that the side surfaces or the front part of the top surface may have stickers pasted thereon while being used in ordinary households, and consequently the sensor function for discrimination may be damaged. On the other hand, providing the discriminating means inside the refrigerator requires an internal search sensor, thus complicating the discriminating process. In contrast, the rear surface of the refrigerator is usually in the vicinity of a wall, thus maintaining its original condition and having few chances of damaging the sensor function.

The glass fiber assembly used in the present invention is a fibrous aggregate composed of glass compositions such as A-glass, C-glass and E-glass, whether it is short fiber or long fiber, or whether it uses a binder or not. In addition, the glass fiber assembly can be used in the form of raw cotton or mat. The short fiber made by centrifugation is particularly preferable because it has a track record as a recycled raw material, and is also inexpensive. In manufacturing the vacuum insulation material, it is preferable to mold it with a binder because of the easier insertion into the packaging member, excellent size stability and other advantages.

### INDUSTRIAL APPLICABILITY

In order to contribute to the recycling of thermal insulation material containing rigid urethane foam and vacuum insulation material, the present invention provides a method for recycling thermal insulation material in such a manner that mixed waste materials can have a uniform quality and be reused at high quality, and also provides a recycled article. The present invention also provides a refrigerator that enables mixed waste materials to have a uniform quality and to be reused at high quality in order to contribute to the recycling of thermal insulation material containing rigid urethane foam and vacuum insulation material. Thus, the present invention can improve the rate of recycling of waste refrigerators, thus contributing to the recycling, and can also provide an energy-efficient and environment-friendly refrigerator. Therefore, the present invention has industrial significance.

### Reference marks in the drawings

- 1: discriminating process
- 2: removing valuables, refrigerants and the like
- 3: pulverizing process
- 4: sorting operation
- 5: foaming gas recovery
- 61, 62: recovery tower for waste thermal insulation materials
- 7: inorganic material content percentage adjusting process
- 8: mixer
- 9: waste material processing process
- 10: grain size adjustment
- 11: mixing process
- 12: pressure molding process
- 13: particle board
- 14: powdering operation
- 15: sealing into a packaging member under a reduced pressure
- 16: vacuum insulation material
- 17: separating process
- 18: grinding operation
- 19: air sorting
- 20: classifier
- 21: high-temperature melting operation
- 22: centrifugation
- 23: glass fiber assembly
- 24: rigid urethane foam waste
- 25: inorganic material waste
- 26: timber chip
- 27: binder
- 28: impurity
- 29: packaging member
- 30: glass fiber waste
- 31: refrigerator
- 32: display control panel

## Claims

1. A method for recycling thermal insulation material which is formed of vacuum insulation material (16) having inorganic material (25) as a core material and of rigid urethane foam (24), the method comprising:
a step of pulverizing at least one thermal insulation material containing the inorganic material (25) and the rigid urethane foam (24); and
an inorganic material content adjusting step comprising the step of adjusting a percentage of inorganic material content in mixed material consisting of the thermal insulation material pulverized, the inorganic material content adjusting step including a step of measuring the percentage of inorganic material content in the mixed material pulverized, and comprising the step of mixing rigid urethane foam (24) to the mixed material pulverized or the step of sorting out inorganic material (25) from the rigid urethane foam (24) by an air sorter (19) by making use of the difference in specific gravity,
wherein the vacuum insulation material (16) is made by sealing a powder consisting of the mixed material into a packaging member (29) under reduced pressure.

2. The method for recycling the thermal insulation material according to claim 1 further comprising:
a step of pulverizing a second thermal insulation material exclusively consisting of rigid urethane foam (24), wherein
the inorganic material content adjusting step is a step of mixing the pulverized thermal insulation material containing the vacuum insulation material (16) with the second thermal insulation material pulverized, based on a measured percentage of inorganic material content, thereby obtaining the mixed material with a prescribed percentage value of inorganic material content.

3. The method for recycling the thermal insulation material according to claim 1, wherein the inorganic material content adjusting step is a step of obtaining the mixed material with a prescribed percentage value of inorganic material content by sorting out and removing the inorganic material contained in the pulverized thermal insulation material, based on the measured percentage of inorganic material content.

4. The method for recycling the thermal insulation material according to claim 3, wherein
the sorting operation is classification which makes use of difference in grain size between the pulverized inorganic material and the pulverized rigid urethane foam.

5. The method for recycling the thermal insulation material according to claim 1 further comprising:
a separating step of cutting out the vacuum insulation material (16) and the rigid urethane foam (24) as an integral unit from a main body of a refrigerator.

6. The method for recycling the thermal insulation material according to claim 1 further comprising:
a waste material processing step of processing the mixed material obtained in the inorganic material content adjusting step into a recyclable form.

7. The method for recycling the thermal insulation material according to claim 6, wherein
the waste material processing step is a step of molding a particle board, and includes an operation to pressurize the mixed material.

8. The method for recycling the thermal insulation material according to claim 6, wherein
the waste material processing step is a step of producing vacuum insulation material (16), and includes
an operation to powder the mixed material; and
a step of sealing the powder thus obtained into a coating member under a reduced pressure.

9. The method for recycling the thermal insulation material according to claim 1 further comprising:
a discriminating step of reading an inorganic material weight value and a rigid urethane foam weight value from a discriminating means owned by a refrigerator (31), wherein
the inorganic material content adjusting step makes use of the inorganic material weight value and the rigid urethane foam weight value in order to adjust the percentage of inorganic material content in the mixed material.

10. The method for recycling the thermal insulation material according to claim 1, wherein the inorganic material is a glass fiber assembly.

11. An article obtainable by a method in accordance with any one of claims 1 to 10, which is made by recycling thermal insulation material which is formed of vacuum insulation material (16) having inorganic material (25) as a core material and of rigid urethane foam (24), wherein
mixed material which is formed of the vacuum insulation material (16) and the rigid urethane foam (24) has an inorganic material content that is adjusted to be not less than 0.01% nor more than 60%, and
wherein the article is vacuum insulation material which is made by sealing a powder consisting of the mixed material into a packaging member under a reduced pressure.

12. The article according to claim 11, wherein
the article is a particle board (13) which is made by pressurizing and molding the mixed material.

13. The article according to claim 11, wherein
the powder contains inorganic material (25) of not less than 0.1 % nor more than 20%.

## Patentansprüche

1. Verfahren zum Recyceln von Wärme-Isoliermaterial, das aus Vakuum-Isoliermaterial (16) mit anorganischem Material (25) als ein Kernmaterial und starrem Urethan-Schaumstoff (24) besteht, wobei das Verfahren umfasst:
einen Schritt des Pulverisierens wenigstens eines Wärme-Isoliermaterials, das das anorganische Material (25) und den starren Urethan-Schaumstoff (24) enthält; und
einen Schritt zum Regulieren des Gehalts an anorganischem Material, der den Schritt umfasst, in dem ein prozentualer Gehalt an anorganischem Material in gemischtem Material reguliert wird, das aus dem pulverisierten Wärme-Isoliermaterial besteht, wobei der Schritt zum Regulieren des Gehalts an anorganischem Material einen Schritt des Messens des prozentualen Gehalts an anorganischem Material in dem pulverisierten gemischten Material einschließt, und der den Schritt des Mischens von starrem Urethan-Schaumstoff (24) mit dem pulverisierten gemischten Material oder den Schritt des Aussortierens von anorganischem Material (25) aus dem starren Urethan-Schaumstoff (24) mittels eines Luftsortierers (19) unter Nutzung des unterschiedlichen spezifischen Gewichtes umfasst,
wobei das Vakuum-Isoliermaterial (16) hergestellt wird, indem ein Pulver, das aus dem gemischten Material besteht, unter reduziertem Druck in ein Gehäuseelement (29) eingeschlossen wird.

2. Verfahren zum Recyceln des Wärme-Isoliermaterials nach Anspruch 1, das des Weiteren umfasst:
einen Schritt des Pulverisierens eines zweiten Wärme-Isoliermaterials, das ausschließlich aus starrem Urethan-Schaumstoff (24) besteht, wobei
der Schritt zum Regulieren des Gehaltes an anorganischem Material ein Schritt ist, in dem das pulversierte Wärme-Isoliermaterial, das das Vakuum-Isoliermaterial (16) enthält, auf Basis eines gemessenen prozentualen Gehaltes an anorganischem Material mit dem zweiten pulverisierten Wärme-Isoliermaterial gemischt wird, um so das gemischte Material mit einem vorgeschriebenen Wert des prozentualen Gehalts an anorganischem Material zu gewinnen.

3. Verfahren zum Recyceln des Wärme-Isoliermaterials nach Anspruch 1, wobei der Schritt zum Regulieren des Gehaltes an anorganischem Material ein Schritt ist, in dem das gemischte Material mit einem vorgeschriebenen Wert des prozentualen Gehaltes an anorganischem Material gewonnen wird, indem das in dem pulverisierten Wärme-Isoliermaterial enthaltene anorganische Material auf Basis des gemessenen prozentualen Gehaltes an anorganischem Material aussortiert und entfernt wird.

4. Verfahren zum Recyceln des Wärme-Isoliermaterials nach Anspruch 3, wobei der Sortiervorgang Klassierung ist, bei der ein Unterschied zwischen dem pulverisierten anorganischen Material und dem pulverisierten starren Urethan-Schaumstoff hinsichtlich der Korngröße genutzt wird.

5. Verfahren zum Recyceln des Wärme-Isoliermaterials nach Anspruch 1, das des Weiteren umfasst:
einen Trennschritt, in dem das Vakuum-Isoliermaterial (16) und der starre Urethan-Schaumstoff (24) als eine integrale Einheit aus einem Hauptkörper eines Kühlschranks herausgeschnitten werden.

6. Verfahren zum Recyceln des Wärme-Isoliermaterials nach Anspruch 1, das des Weiteren umfasst:
einen Schritt zum Verarbeiten von Abfallmaterial, in dem das in dem Schritt zum Regulieren des Gehaltes an anorganischem Material gewonnene gemischte Material zu einer Form verarbeitet wird, in der es recycelt werden kann.

7. Verfahren zum Recyceln des Wärme-Isoliermaterials nach Anspruch 6, wobei der Schritt zum Verarbeiten von Abfallmaterial ein Schritt ist, in dem eine Spanplatte geformt wird und der einen Vorgang zum Pressen des gemischten Materials einschließt.

8. Verfahren zum Recyceln des Wärme-Isoliermaterials nach Anspruch 6, wobei der Schritt zum Verarbeiten von Abfallmaterial ein Schritt ist, in dem Vakuum-Isoliermaterial (16) hergestellt wird und der einschließt:
einen Vorgang zum Pulverisieren des gemischten Materials; und
einen Vorgang zum Einschließen des so gewonnenen Pulvers in ein Ummantelungselement unter reduziertem Druck.

9. Verfahren zum Recyceln des Wärme-Isoliermaterials nach Anspruch 1, das des Weiteren umfasst:
einen Schritt zum Unterscheiden, in dem ein Wert des Gewichtes von anorganischem Material und ein Wert des Gewichtes von starrem Urethan-Schaumstoff von einer Unterscheidungseinrichtung erfasst werden, die ein Kühlschrank (31) aufweist, wobei in dem Schritt zum Regulieren des Gehaltes an anorganischem Material der Wert des Gewichtes von anorganischem Material und der Wert des Gewichtes von starrem Urethan-Schaumstoff verwendet werden, um den prozentualen Gehalt an anorganischem Material in dem gemischten Material zu regulieren.

10. Verfahren zum Recyceln von Wärme-Isoliermaterial nach Anspruch 1, wobei das anorganische Material eine Glasfaser-Konfektionierung (glass fiber assembly) ist.

11. Erzeugnis, das mit einem Verfahren nach einem der Ansprüche 1 bis 10 gewonnen werden kann und das hergestellt wird, indem Wärme-Isoliermaterial recycelt wird, das aus Vakuum-Isoliermaterial (16) mit anorganischem Material (25) als ein Kernmaterial und aus starrem Urethan-Schaumstoff (24) besteht, wobei
gemischtes Material, das aus dem Vakuum-Isoliermaterial (16) und dem starren Urethan-Schaumstoff (24) besteht, einen Gehalt an anorganischem Material hat, der so reguliert ist, dass er nicht weniger als 0,01 % und nicht mehr als 60 % beträgt, und
wobei das Erzeugnis Vakuum-Isoliermaterial ist, das hergestellt wird, indem ein aus dem gemischten Material bestehendes Pulver unter reduziertem Druck in einem Gehäuseelement eingeschlossen wird.

12. Erzeugnis nach Anspruch 11, wobei das Erzeugnis eine Spanplatte (13) ist, die hergestellt wird, indem das gemischte Material gepresst und geformt wird.

13. Erzeugnis nach Anspruch 11, wobei
das Pulver nicht weniger als 0,1 % und nicht mehr als 20 % anorganisches Material (25) enthält.

## Revendications

1. Procédé de recyclage d'un matériau d'isolation thermique constitué d'un matériau d'isolation sous vide (16) comportant un matériau inorganique (25) en tant que matériau de coeur et une mousse d'uréthane rigide (24), le procédé comprenant :
une étape de pulvérisation d'au moins un matériau d'isolation thermique contenant le matériau inorganique (25) et la mousse d'uréthane rigide (24) ; et
une étape de réglage de la teneur en matériau inorganique comprenant l'étape de réglage du pourcentage de la teneur en matériau inorganique dans un matériau mélangé constitué du matériau d'isolation thermique pulvérisé, l'étape de réglage de la teneur en matériau inorganique incluant une étape de mesure du pourcentage de la teneur en matériau inorganique dans le matériau mélangé pulvérisé et comprenant l'étape de mélange de la mousse d'uréthane rigide (24) avec le matériau mélangé pulvérisé ou l'étape de tri du matériau inorganique (25) de la mousse d'uréthane rigide (24) par une trieuse pneumatique (19) en utilisant la différence de densité,
dans lequel le matériau d'isolation sous vide (16) est réalisé par scellement d'une poudre constituée du matériau mélangé dans un élément de conditionnement (29) sous une pression réduite.

2. Procédé de recyclage d'un matériau d'isolation thermique selon la revendication 1, comprenant en outre :
une étape de pulvérisation d'un second matériau d'isolation thermique constitué exclusivement de mousse d'uréthane rigide (24), dans lequel
l'étape de réglage de la teneur en matériau inorganique est une étape de mélange du matériau d'isolation thermique pulvérisé contenant le matériau d'isolation sous vide (16) avec le second matériau d'isolation thermique pulvérisé, en se basant sur le pourcentage mesuré de teneur en matériau inorganique, de façon à obtenir le matériau mélangé avec une valeur de pourcentage prescrite de teneur en matériau inorganique.

3. Procédé de recyclage d'un matériau d'isolation thermique selon la revendication 1, dans lequel
l'étape de réglage de la teneur en matériau inorganique est une étape d'obtention du matériau mélangé avec une valeur de pourcentage prescrite de teneur en matériau inorganique par tri et retrait du matériau inorganique contenu dans le matériau d'isolation thermique pulvérisé, en se basant sur le pourcentage mesuré de teneur en matériau inorganique.

4. Procédé de recyclage d'un matériau d'isolation thermique selon la revendication 3, dans lequel
l'opération de tri est une classification utilisant la différence de granulométrie entre le matériau inorganique pulvérisé et la mousse d'uréthane rigide pulvérisée.

5. Procédé de recyclage d'un matériau d'isolation thermique selon la revendication 1, comprenant en outre :
une étape de séparation par découpage du matériau d'isolation sous vide (16) et de la mousse d'uréthane rigide (24) en une unité intégrée, depuis le corps principal d'un réfrigérateur.

6. Procédé de recyclage d'un matériau d'isolation thermique selon la revendication 1, comprenant en outre :
une étape de traitement de déchets par traitement du matériau mélangé obtenu à l'étape de réglage de la teneur en matériau inorganique, sous une forme recyclable.

7. Procédé de recyclage d'un matériau d'isolation thermique selon la revendication 6, dans lequel
l'étape de traitement de déchets est une étape de moulage d'un panneau de particules et comporte une opération de pressurisation du matériau mélangé.

8. Procédé de recyclage d'un matériau d'isolation thermique selon la revendication 6, dans lequel
l'étape de traitement de déchets est une étape de production d'un matériau d'isolation sous vide (16), et comporte :
une opération pour réduire le matériau mélangé en poudre ; et
une étape de scellement de la poudre ainsi obtenue dans un élément de revêtement sous une pression réduite.

9. Procédé de recyclage d'un matériau d'isolation thermique selon la revendication 1, comprenant en outre :
une étape de discrimination par lecture de la valeur du poids de matériau inorganique et de la valeur du poids de mousse d'uréthane rigide à partir d'un moyen de discrimination contenu dans un réfrigérateur (31), dans lequel
l'étape de réglage de la teneur en matériau inorganique utilise la valeur du poids de matériau inorganique et la valeur du poids de mousse d'uréthane rigide pour régler le pourcentage de la teneur en matériau inorganique dans le matériau mélangé.

10. Procédé de recyclage d'un matériau d'isolation thermique selon la revendication 1, dans lequel le matériau inorganique est un assemblage de fibre de verre.

11. Article pouvant être obtenu par un procédé selon l'une quelconque des revendications 1 à 10, réalisé par recyclage d'un matériau d'isolation thermique formée d'un matériau d'isolation sous vide (16) comportant un matériau inorganique (25) en tant que matériau de coeur et une mousse d'uréthane rigide (24), dans lequel
le matériau mélangé formé du matériau d'isolation sous vide (16) et de la mousse d'uréthane rigide (24) possède une teneur en matériau inorganique réglée de manière à être supérieure ou égale à 0,01 % et inférieure ou égale à 60 %, et
dans lequel l'article est un matériau d'isolation sous vide réalisé par scellement d'une poudre constituée du matériau mélangé dans un élément de conditionnement sous une pression réduite.

12. Article selon la revendication 11, dans lequel
l'article est un panneau de particules (13) réalisé par pression et moulage du matériau mélangé.

13. Article selon la revendication 11, dans lequel
la poudre contient un matériau inorganique (25) en une quantité supérieure ou égale à 0,1 % et inférieure ou égale à 20 %.
